Europäisches Patentamt

European Patent Office

Office européen des brevets

(11) Publication number: 0 347 994
A2

## (12) EUROPEAN PATENT APPLICATION

(21) Application number: 89201594.2

(51) Int. Cl.⁴: G02F 1/01 , G02B 26/00

(22) Date of filing: 19.06.89

The title of the invention has been amended (Guidelines for Examination in the EPO, A-III, 7.3).

(30) Priority: 22.06.88 IT 2106488

(43) Date of publication of application:
27.12.89 Bulletin 89/52

(84) Designated Contracting States:
AT BE CH DE ES FR GB GR IT LI LU NL SE

(71) Applicant: CONSIGLIO NAZIONALE DELLE RICERCHE
Piazzale Aldo Moro, 7
I-00185 Roma(IT)

Applicant: C.I.S.E. S.P.A.
Via Reggio Emilia 39
I-20090 Segrate Milano(IT)

(72) Inventor: Martinelli, Mario
Via Agadir, 16B
I-20097 San Donato Milanese (MI)(IT)
Inventor: De Maria, Letizia
Via G. da Procida, 4
I-20149 Milano(IT)

(74) Representative: Marchi, Massimo et al
c/o Marchi & Mittler s.r.l. Viale Lombardia 20
I-20131 Milano(IT)

(54) **Lamina for the rotation of the direction of polarisation in an optical fibre and its application.**

(57) A rotating lambda/2 lamina is accomplished with optical fibres by applying transversally to the fibre itself at least three sinusoidal forces ($F_1$, $F_2$, $F_3$; $F'_1$, $F'_2$, $F'_3$) having constant maximum amplitude, which act in radial directions at 120° one to the other and are out of phase over time by 120° one from the other.

Among its possible applications there is particularly envisaged that related to optical fibre frequency modulators-translators, in which one or more rotating lambda/2 laminas (23) are alternated with as many static lambda/2 laminas (25), all made of optical fibres.

# Fig.1

## Rotating optical fibre lambda/2 lamina and its applications.

The present invention has as its object a rotating optical fibre lambda/2 lamina and its possible applications.

Development of optical fibre communications and of optical fibre sensor equipment requires the availability of advanced electro-optical components for processing the signal. There are three component families which may be identified: discrete optical components, optically integrated components, "optical fibre" components. The latter family shows a particular application interest in that the accomplishment of components will "all-fibre" techniques in optical fibre systems avoids the insertion losses inevitable with the other two families. In addition an "all-fibre" component allows the accomplishment of highly reliable, low cost, flexible and easily reproducible optical fibre circuits.

Among the "all-fibre" components which have been accomplished to this day, there is a component missing which is very important for its possible applications: a rotating lambda/2 lamina. The static lambda/2 lamina has been one of the first components to have been developed completely in optical fibre exploiting the birefringence effect induced by deformation on the fibre. To this day, however, no teachings have been presented to make the lambda/2 lamina rotate, also at high speed, continuously and with no limitations.

The current lack of a rotating optical fibre lambda/2 lamina constitutes a brake for the development of some components in the communications field. This is particularly true for optical fibre frequency modulators, which play an important role in all optical processing techniques. The use of such devices, when used as frequency translators, in fact allows the displacement of the detected signal from the low-frequency noise area and the determination of the phase slip sense. The latter is particularly important in the case where coherent detection is applied to velocity-measuring or gyroscopic Doppler laser techniques, wherein frequency modulation is added to the carrier.

As regards communications in general, the availability of optical fibre frequency modulators is useful both in the development of optical systems for coherent-type transmission and for accomplishing the frequency-divider multiplexing function.

The two great directions of technological development, represented by integrated optics and by all-fibre components, do not at this time propose an effective solution for frequency modulator-translators. In the first case the negative factor is represented by high losses and difficulties of insertion presented by optically-integrated components, in the second case the overall inefficiency and unreliability of all-fibre devices proposed to this day. As regards the latter, whether they are based on serrodyne-type techniques or on mode-coupling (spatial and polarization), the problem remains open in particular of developing a device which may associate the advantages of an efficient modulation with that of an easy insertion in an all-fibre circuit.

In view of this state of the art, the main object of the present invention is to accomplish a rotating lambda/2 lamina completely made of optical fibre.

A further object is to accomplish its possible applications in the field of communications, in particular as regards frequency modulators (or translators).

The above main object, according to the invention, is accomplished by a rotating optical fibre lambda/2 lamina, characterized in that it includes means for applying transversally to an optical fibre at least three forces acting in radial directions angularly displaced at $120°$ one from the other, said forces having a sinusoidal form over time and the same maximum amplitude and being out of phase one from the other over time by $120°$.

The principle on which the lamina according to the invention is based is the following. As is well known, the effect of two equal and contrary forces acting on a monomodal optical fibre is that of making it birefringent. It is thus possible, within the fibre, and with appropriate compression values, to create the effect of a retarding lambda/2 lamina, which is in fact characterized by a given value of birefringence.

The birefringence induced on the fibre may be represented using the system known as a "Poincaré sphere", wherein linear bifrefringence is defined by a vector having module equal to the numerical value of the birefringence, with direction coincident with a radius of the sphere, lying in the equatorial plane, and sense given by the convention with which the light's rotation has been selected. It can be shown that, when various causes of birefringence act on the same fibre section, the overall effect on the polarization state is obtained by vectorially adding the individual birefringence vectors. The problem of obtaining a birefringence having constant and rotating amplitude, that is a rotating lambda/2 lamina, is thus reduced to the problem of obtaining a vector having constant and rotating amplitude on the equatorial plane of a Poincaré sphere.

According to the invention as defined above, this is obtained by applying transversally to the fibre three forces of equal amplitude acting along three different directions at $120°$ one from the other. To each of said three forces the other two react so as to define a reaction force opposite to the first in the same direction but in the contrary sense. Three corresponding birefringence vectors are thus created, plotted on the sphere's equatorial plane and at a 120° angle one from the other. Still according to the invention defined above, when a sinusoidal form over time is applied to the above three forces with equal maximum amplitude and if the forces are out of phase one from the other by 120° over time, there is obtained a birefringence vector having an absolute value which is constant over time but which continually changes direction, rotating at an angular speed equal to the pulsing action of the control signal of the fibre compression. Such rotating vector is evidently representative of the rotating optical fibre lambda/2 lamina which it was desired to obtain.

Such a lamina may be used in several applications in the field of optical processing of signals. In particular it is suitable for the accomplishment of an optical fibre frequency modulator-translator, wherein one or more rotating optical fibre lambda/2 laminas are alternated with an equal number of static lambda/2 laminas to determine together with a lambda/4 lamina and a polarization beam divider a pair of orthogonal polarization components translated one with respect to the other by four times the frequency of the original beam or by a multiple thereof (according to the pairs of lambda/2 laminas used).

In this way an optical fibre frequency modulator is obtained which, with respect to the systems known up to now, presents the following advantages: limited size, very low operating power, use of simple monomodal fibres, use of simple sinusoidal power supply signals, wide frequency band, simplicity of reproduction, possibility of being easily inserted in an optical fibre circuit.

The features of the present invention will be more clearly understood by referring, as an example, to the enclosed drawings, wherein:

Fig. 1 shows a schematic representation of the principle of the rotating optical fibre lambda/2 lamina according to the present invention;

Fig. 2 shows a schematic representation of the equatorial plane of a Poincaré sphere related to the distribution of forces of Fig. 1, assuming that such forces have constant amplitude;

Fig. 3 shows the real variations of the above forces over time and the corresponding representations of the refringence vectors in the equatorial plane of a Poincaré sphere;

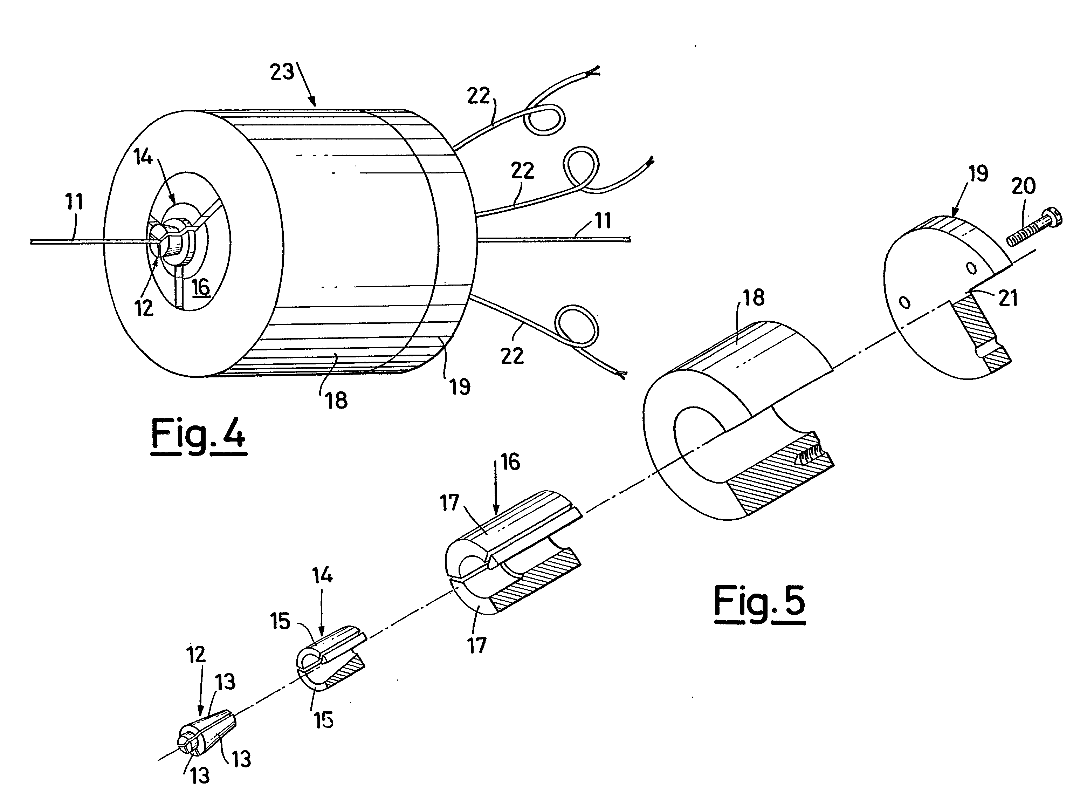

Fig. 4 shows a perspective view of an embodiment of a rotating optical fibre lambda/2 lamina according to the present invention;

Fig. 5 shows the assembly of Fig. 4 in an exploded perspective view;

Fig. 6 shows in a schematic form an optical fibre frequency modulator accomplished by using a rotating lambda/2 lamina according to the present invention;

Fig. 7 shows in a schematic form another optical fibre frequency modulator accomplished by using a plurality of rotating lambda/2 laminas according to the present invention.

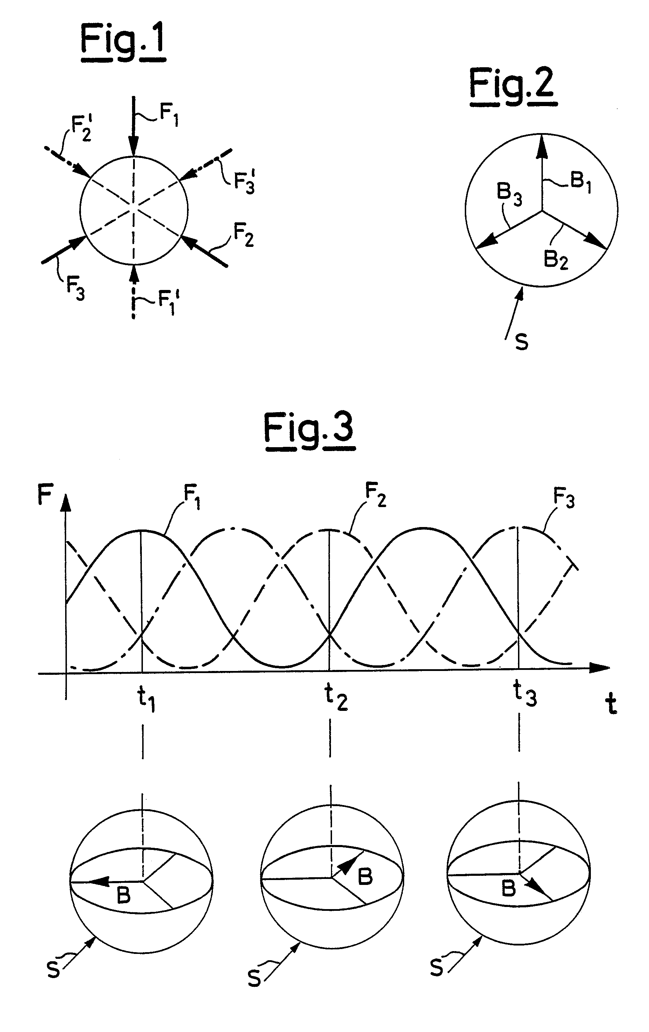

In Fig. 1 there is represented schematically in a transverse cross-section and indicated with 11 an optical fibre to which three forces of equal amplitude $F_1$, $F_2$, $F_3$ are transversally applied acting in respective coplanar radial directions displaced by 120° one from the other. To each of said forces (say, $F_1$) the other two react, giving rise to an equal and opposite force ($F'_1$ in the example considered, $F'_2$ and $F'_3$ in the other cases) which in combination with the main one give rise to a respective birefringence vector indicated with $B_1$, $B_2$, $B_3$ respectively in the representation of a Poincaré sphere in Fig. 2. Alternatively, pairs of equal and opposite forces $F_1$, $F'_1$; $F_2$, $F'_2$; $F_3$ and $F'_3$ may be applied directly to the optical fibre.

According to the invention the three forces $F_1$, $F_2$, $F_3$ (and any opposite forces $F'_1$, $F'_2$, $F'_3$) are made to oscillate over time with a sinusoidal form having a constant amplitude and out of phase one from the other by 120° as shown in the Cartesian diagramme of Fig. 3, wherein F indicates the force, t the time, $t_1$, $t_2$ and $t_3$ the instant of maximum amplitude of the forces $F_1$, $F_2$, $F_3$.

The result is a resultant birefringence vector B, which rotates in the equatorial plane of a Poincaré sphere around the centre of the latter, assuming at the instants $t_1$, $t_2$, $t_3$ the positions indicated in Fig. 3. Its speed of rotation is equal to the pulsing action of the control signal of the forces $F_1$, $F_2$, $F_3$.

The rotating vector B is representative of the rotating optical fibre lambda/2 lamina according to the present invention.

Fig.s 4 and 5 show an embodiment of the above lamina, inspired by the functional principles illustrated in Fig.s 1 to 3.

A chuck or collet 12 with three equal circumferentially distributed sectors 13 clamps the optical fibre 11 so as to apply three radial forces $F_1$, $F_2$, $F_3$ to it and, by reaction, opposite forces $F'_1$, $F'_2$, $F'_3$ respectively. The above sectors are provided with flat internal faces so as to apply each of the above forces according to a single generator of the optical fibre, that is according to the representation of principles of Fig. 1.

The chuck 12 is held radially inside a cylindrical bush 14 having three equal sectors 15, which in turn is located inside a piezoceramic housing 16 also having three equal sectors 17. The whole is housed inside a cylindrical shell 18, which is potentially closed by a flange 19 fastened with screws 20. The flange 19 is traversed by a central hole 21 for the passage of the optical fibre, as well as of respective pairs of power supply cables 22 for the individual sectors 17 of the piezoceramic housing 16. Each cable evidently carries a sinusoidal electrical signal for the generation of a respective force signal $F_1$, $F_2$, $F_3$ through the piezoceramic.

The assembly described above forms a rotating optical fibre lambda/2 lamina according to the present invention, which is indicated as a whole with the numeric reference 23.

One possible utilization of the above lamina is that of the formation of optical fibre frequency modulators-translators.

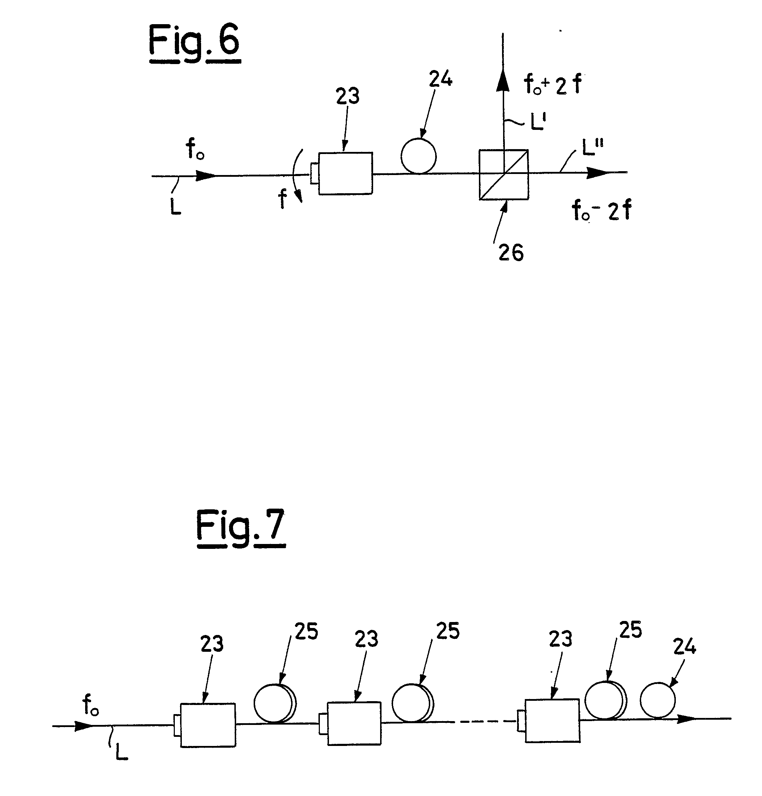

Fig. 6 shows the simplest version of such a modulator, which includes a rotating lambda/2 lamina 23 accomplished with optical fibres according to the present invention, a static lambda/4 lamina 24 also made of optical fibres and a polarized beam divider 26, also preferably accomplished with optical fibres.

Due to the above structure, assuming that the rotating lamina 23 is rotated at a frequency f, a beam of laser light L linearly polarized at a frequency f running along the optical fibre of the modulator is subjected to a frequency translation identifiable when the two orthogonal polarization components $L'$ and $L''$ are extracted from the same beam L, at frequencies $F + 2f$ and $f - 2f$, respectively. In this case one of the two components is translated by a frequency 4f with respect to the other.

Instead of just one rotating optical fibre lambda/2 lamina according to the present invention, the frequency modulator can include any number of them N, alternated with as many static lambda/2 laminas 25, as shown in Fig. 7.

In which case, after the subdivision operated by the beam divider (not illustrated in Fig. 7 but located immediately downstream from the lambda/4 lamina 24) components are obtained which are reciprocally translated by 4Nf one with respect to the other.

In this way, by suitably selecting the number of pairs of rotating and static laminas 23 and 25, it is possible to vary the modulation frequency even up to a very high value while still maintaining unchanged the oscillating frequency of the forces exerted on the optical fibre.

**Claims**

1. Rotating optical fibre lambda/2 lamina, characterized in that it includes means (12, 14, 16, 22) for applying transversally to an optical fibre (11) at least three forces ($F_1$, $F_2$, $F_3$; $F'_1$, $F'_2$, $F'_3$) acting in radial directions angularly displaced at $120°$ one from the other, said forces ($F_1$, $F_2$, $F_3$; $F'_1$, $F'_2$, $F'_3$) having a sinusoidal form over time and the same maximum amplitude and being out of phase one from the other over time by $120°$.

2. Lamina according to claim 1, characterized in that said forces ($F_1$, $F_2$, $F_3$; $F'_1$, $F'_2$, $F'_3$) are constituted by pairs of opposite forces ($F_1$, $F'_1$; $F_2$, $F'_2$; $F_3$, $F'_3$) individually applied to the optical fibre (11).

3. Lamina according to claim 1, characterized in that said means (12, 14, 16, 22) include a chuck and at least three sectors (12) included in a bush having at least three sectors (14) inserted in a piezoceramic housing (16) having at least three sectors, each sector (17) of said piezoelectric housing (16) being connected to a respective electrical power supply cable (22) for a sinusoidal electrical signal having constant maximum amplitude, out of phase over time by $120°$ with respect to the other two.

4. Optical fibre frequency modulator, characterized in that it includes at least one rotating optical fibre lambda/2 lamina (23) according to claims from 1 to 3.

5. Optical fibre frequency modulator, characterized in that it includes a plurality of rotating optical fibre lambda/2 laminas (23) according to claims from 1 to 3, alternated with as many static optical fibre lambda/2 laminas (25).

Fig.1

Fig.2

Fig.3

**Fig.4**

**Fig.5**

EP 0 347 994 A2

## Fig.6

$f_o$

$L$

$f$

23

24

$f_o + 2f$

$L'$

$L''$

$f_o - 2f$

26

## Fig.7

$f_o$

$L$

23   25   23   25   23   25   24